# EUROPÄISCHE PATENTSCHRIFT

(11) **EP 0 833 430 B1**
(45) Veröffentlichungstag und Bekanntmachung des Hinweises auf die Patenterteilung: **05.05.2010**
(21) Anmeldenummer: 97116038.7
(22) Anmeldetag: 16.09.1997
(51) Int. Cl.: H02M 3/337

(54) **Leistungsteil und Sekundärteil für einen Trafo**
Power stage and secondary stage for a transformer
Etage de puissance et étage secondaire pour un transformateur

(30) Priorität: 27.09.1996 AT 56996 U
(43) Veröffentlichungstag der Anmeldung: 01.04.1998
(73) Patentinhaber: Fronius International GmbH, 4643 Pettenbach (AT)
(72) Erfinder: Oberzaucher, Friedrich, Ing., 4600 Wels (AT)
(74) Vertreter: Ofner, Clemens

(56) Entgegenhaltungen:
- EP-A- 0 599 554
- EP-A- 0 704 957
- PATENT ABSTRACTS OF JAPAN vol. 008, no. 095 (E-242), 2. Mai 1984 (1984-05-02) & JP 59 014361 A (NIPPON DENKI KK), 25. Januar 1984 (1984-01-25)

## Beschreibung

Die Erfindung betrifft einen Leistungsteil einer Schweißstromquelle für ein Lichtbogenschweißgerät sowie ein Verfahren zur Erweiterung der Ausgangsspannung bzw. des Ausgangsstroms eines Leistungsteils einer Schweißstromquelle für ein Lichtbogenschweißgerät, wie dies in den Oberbegriffen der Ansprüche 1 und 5 beschrieben ist.

Es ist bereits ein Leistungsteil für einen Schweißprozeß bekannt, bei dem zur Versorgung des Verbrauchers, insbesondere eines Lichtbogens, bzw. zur Aufrechterhaltung des Lichtbogens dieser über eine Halbbrücke mit Energie versorgt wird. Die Halbbrücke wird dabei aus zwei gegenüberliegenden Schaltvorrichtungen und jeweils eine in Serie geschaltete Diode gebildet. Die Halbbrücke wird von einer Spannungsquelle mit Energie versorgt. Im Mittelpunkt jeder Schaltvorrichtung und der Dioden ist eine Primärspule eines Transformators angeschlossen. Die Sekundärspule des Transformators ist mit dem Verbraucher, insbesondere der Elektrode, und dem Werkstück unter Zwischenschaltung einer Gleichrichterschaltung und einer Ausgangsdrossel verbunden. Die Versorgung des Verbrauchers mit Energie, insbesondere mit Strom und Spannung, wird durch taktweises Ansteuern der Steuervorrichtungen erreicht, wobei in den Pausen, in denen die Schaltvorrichtungen geöffnet sind, die im Transformator gespeicherte Energie über die Primärspule und die Dioden an die Spannungsquelle zurückgeliefert wird. Nachteilig ist hierbei, daß je hochohmiger der Verbraucher wird, der Strom am Verbraucher bis zu Null sinkt, wodurch der Lichtbogen erlischt und die Spannung am Verbraucher steigt.

Die EP 0 599 554 A2 beschreibt einen DC-DC-Wandler mit einem Transformator, dessen Sekundärwicklung geteilt ist bzw. eine Anzapfung aufweist, um eine Unterdrückung der Welligkeit der Ausgangsspannung des DC-DC-Wandlers zu erreichen. Diese Unterdrückung der Welligkeit der Ausgangsspannung tritt dabei bei einer bestimmten Eingangsspannung des DC-DC-Wandlers auf. Dadurch wird dieser DC-DC-Wandler für Anwendungen im Telekommunikations- oder im elektronischen Datenverarbeitungsbereich zufriedenstellend einsetzbar. Die Welligkeitsunterdrückung ist dabei abhängig von der Festlegung der Position der Anzapfung an der Sekundärwicklung des Transformators, wobei die Reduzierung der Welligkeit der Ausgangsspannung bei einer bestimmten Eingangsspannung auftritt. Die vorgeschlagene Ausbildung minimiert auch den magnetischen Fluss, welcher von der ausgangsseitigen Drosselspule des DC-DC-Wandlers innerhalb eines bestimmten Bereiches der Eingangsspannung des DC-DC-Wandlers aufrecht erhalten werden muss. Primärseitig wird der Transformator über zwei zueinander parallel geschaltete Leistungsschalter, welche von einer Steuervorrichtung abwechselnd bzw. aufeinanderfolgend in den leitenden Zustand versetzt werden, mit elektrischer Energie beaufschlagt. Insbesondere ist der erste Leistungsschalter für eine bestimmte erste Zeitdauer leitend und der zweite Leistungsschalter, zu welchem ein Kondensator in Serie geschaltet ist, ist für eine im wesentlichen anschließende, zweite Zeitdauer leitend. Die Steuervorrichtung für die beiden zueinander parallel geschalteten und in Serie zur Primärwicklung des Transformators angeordneten Leistungsschalter ermittelt ferner die Ausgangsspannung des DC-DC-Wandlers und vergleicht diese mit einem Referenzwert, um daraus eine Differenzspannung zu generieren. Diese Differenzspannung wird von der Steuervorrichtung eingesetzt, um das Zeitverhältnis zwischen den Zeitintervallen für den ersten Leistungsschalter und den zweiten Leistungsschalter zu verändern, um somit die Ausgangsspannung auf einen geregelten Wert einzustellen. Die Welligkeit der Ausgangsspannung des DC-DC-Wandlers wird durch diese Ausbildung innerhalb eines bestimmten Eingangsspannungsbereiches wesentlich reduziert, wobei sich innerhalb des Nennspannungsbereiches des Eingangs auch ein sehr ruhiges elektromagnetisches Interferenzverhalten des DC-DC-Wandlers ergibt.

Aus der EP 0 704 957 A2 ist eine Stromquelle für die Energieversorgung eines Verbrauchers bekannt, bei der die Primärspule eines Transformators über eine Vollbrückenschaltung wechselweise mit einer Gleichstromquelle verbindbar ist. Der Verbraucher ist über eine Sekundärspule des Transformators, welcher eine aus dem Stand der Technik bekannte Mittelpunktschaltung mit Spannungsgleichrichtung zugeordnet ist, mit Energie versorgt. Weiters weist diese Stromquelle jeweils zwei Entlastungsschaltkreise auf, wobei die beiden Entlastungsschaltkreise einerseits mit dem Mittelpunkt der paarweise angeordneten Schaltvorrichtungen und andererseits mit dem positiven Potential bzw. dem negativen Potential der Versorgungsspannung für die Vollbrücke verbunden sind. Beim paarweisen Umschalten der Schaltvorrichtungen der Vollbrücke zum Umpolen der Primärwicklung des Transformators erfolgt der Schaltvorgang stromlos, da aufgrund der beiden Entlastungsschaltkreise die Energie über die zusätzlichen Schaltvorrichtungen in den Entlastungsschaltkreisen vorbeigeführt wird, sodass ein stromloses Umpolen des Transformators ermöglicht ist.

Der vorliegenden Erfindung liegt die Aufgabe zugrunde einen Leistungsteil sowie ein Verfahren zur Erweiterung von Ausgangsspannung bzw. -strom zu schaffen, bei welchem ein größerer Ausgangsbereich der Energieversorgung für einen Schweißprozess geschaffen wird.

Diese Aufgabe der Erfindung wird durch die Merkmale im Kennzeichenteil des Anspruches 1 gelöst. Der überraschende Vorteil dieser scheinbar einfachen Lösung liegt darin, daß in den Pausen, in denen die Schaltvorrichtungen geöffnet sind, die im Transformator gespeicherte Energie über die Primärspule an die Spannungsquelle und teilweise über die Zusatzdrossel an den Verbraucher abgegeben wird, sodaß bei einem Anstieg des Widerstandes an der Elektrode, z.B. wie dies beim Auftrennen eines Kurzschlusses bei einem Lichtbogenschweißverfahren der Fall ist, der Strom an der Elektrode sinkt, wobei durch Zuführung von zusätzlicher Energie an den Schweißprozeß ein einfaches Wiederzünden bzw. Aufrechterhalten des Lichtbogens erreicht wird. Vorteilhaft ist weiters, daß durch das teilweise Entmagnetisieren der gespeicherten Energie des Transformators über die Sekundärseite eine Strom- und Spannungserhöhung am Ausgang erreicht wird, wodurch ein einfaches Aufrechterhalten des Lichtbogens bzw. eine einfache Wiederzündung des Lichtbogens nach einem Kurzschluß möglich ist. Vorteilhaft ist auch, daß das Einsetzen des Energieflusses vom Transformator zu dem Verbraucher über die Ausgangsdrossel festgelegt werden kann, wodurch eine einfache Anpassung an die unterschiedlichsten Gegebenheiten des Leistungsteils möglich ist.

Vorteilhaft ist auch eine Ausgestaltung nach Anspruch 2, da dadurch auch bei Nichtbenötigung der Energie am Verbraucher eine Entmagnetisierung über die Sekundärseite des Transformators erfolgt, sodaß eine effektive Vergrößerung der Pulsweite gegeben ist. Ein weiterer Vorteil liegt darin, daß durch die Anordnung des Kondensators auf der Sekundärseite des Transformators die Dioden zum Entmagnetisieren des Transformators auf der Primärseite, also die in Serie zu den Schaltvorrichtungen angeordneten Dioden und auf der Sekundärseite die Zusatzdrossel entfallen kann, da eine vollständige Entmagnetisierung des Transformators auf die Sekundärseite des Transformators durchgeführt werden kann, wobei die Energie im Kondensator gespeichert wird.

Weiters umfaßt die Erfindung ein Verfahren zur Erweiterung der Ausgangsspannung bzw. des Ausgangsstroms, wie es im Oberbegriff des Anspruches 5 beschrieben ist.

Die Aufgabe der Erfindung wird verfahrensgemäß durch die Maßnahmen im Kennzeichenteil des Anspruches 5 gelöst. Vorteilhaft ist bei diesem Verfahren, daß durch die Entmagnetisierung des Transformators teilweise über die Primärseite und die Sekundärseite eine effektive Vergrößerung der Pulsweite erreicht wird, sodaß dem Verbraucher mehr Leistung zugeführt werden kann.

Die Erfindung wird im nachfolgenden anhand der in den Zeichnungen dargestellten Ausführungsbeispiele näher erläutert.

Es zeigen:
- Fig. 1: ein Schaltschema eines zum Stand der Technik zählenden Leistungsteils in vereinfachter, schematischer Darstellung;
- Fig. 2: ein Diagramm der Leistungsform des zum Stand der Technik zählenden Leistungsteils in vereinfachter, schematischer Darstellung;
- Fig. 3: ein Schaltschema des erfindungsgemäßen Leistungsteils in vereinfachter, schematischer Darstellung;
- Fig. 4: ein Diagramm der Leistungsform des erfindungsgemäßen Leistungsteils in vereinfachter, schematischer Darstellung.

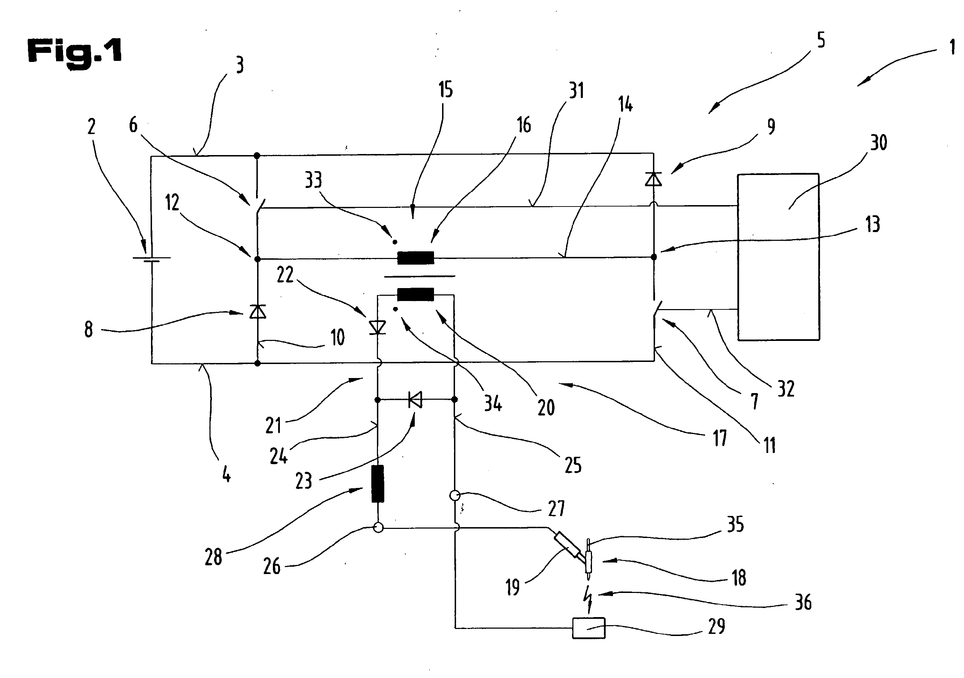

In Fig. 1 ist ein zum Stand der Technik zählender Leistungsteil 1, beispielsweise bei einer Anwendung als Schweißstromquelle für ein Lichtbogenschweißgerät mit abschmelzbarem Schweißdraht, gezeigt.

Der Leistungsteil 1 wird dabei an eine Spannungsquelle 2 angeschlossen. Die Spannungsquelle 2 kann aus einem Spannungsversorgungsnetz unter Zwischenschaltung eines Gleichrichters bzw. durch eine Batterie gebildet werden. An den Ausgängen der Spannungsquelle 2 ist jeweils eine Versorgungsleitung 3, 4 angeordnet, wobei die Versorgungsleitung 3 das Leistungsteil 1 mit dem positiven Potential und die Versorgungsleitung 4 das Leistungsteil 1 mit dem negativen Potential versorgt.

Parallel zur Spannungsquelle 2 wird eine Halbbrücke 5 mit den Versorgungsleitungen 3, 4 verbunden. Die Halbbrücke 5 besteht dabei aus zwei Schaltvorrichtungen 6, 7 und zwei Dioden 8, 9. Jeweils eine Schaltvorrichtung 6, 7 und eine Diode 8, 9 werden über eine Verbindungsleitung 10, 11 mit den Versorgungsleitungen 3, 4 verbunden, sodaß diese parallel zur Spannungsquelle 2 angeordnet sind. Die Schaltvorrichtungen 6, 7 werden gegengleich angeordnet, d.h., daß die Schaltvorrichtung 6 mit der Versorgungsleitung 3 und die Schaltvorrichtung 7 mit der Versorgungsleitung 4 über die Verbindungsleitungen 10, 11 verbunden sind. Die dazugehörigen Dioden 8, 9 sind in Durchlaßrichtung zu der Versorgungsleitung 3 angeordnet.

Im Mittelpunkt 12, 13 der Schaltvorrichtungen 6, 7 und der Dioden 8, 9 ist über eine Leitung 14 ein Transformator 15 mit einer Primärspule 16 angeordnet.

An einer Sekundärseite 17 des Transformators 15 ist ein Verbraucher 18, insbesondere ein Schweißbrenner 19, angeschlossen, d.h., daß an einer Sekundärspule 20 der Schweißbrenner 19 unter Zwischenschaltung einer Gleichrichterschaltung 21, die durch eine Gleichrichterdiode 22 und eine Freilaufdiode 23 gebildet wird, über Versorgungsleitungen 24, 25 an Ausgängen 26, 27 des Leistungsteils 1 angeschlossen ist.

Die Gleichrichterdiode 22 in der Versorgungsleitung 24 wird in Durchlaßrichtung zu dem Ausgang 26 angeordnet. Die weitere Freilaufdiode 23 wird parallel zur Sekundärspule 20 zwischen der Gleichrichterdiode 22 und dem Ausgang 26 mit den Versorgungsleitungen 24, 25 verbunden. Weiters ist eine Ausgangsdrossel 28 zwischen der Gleichrichterdiode 22, sowie der Freilaufdiode 23 und dem Ausgang 26 angeordnet. Der weitere Ausgang 27 des Leistungsteils 1 ist mit einem Werkstück 29 verbunden.

Wird der Leistungsteil 1 in Betrieb genommen, d.h., daß von der Spannungsquelle 2 der Leistungsteil 1 mit Strom und Spannung versorgt wird, so wird das positive Potential der Spannungsquelle 2 an die Versorgungsleitung 3 und das negative Potential der Spannungsquelle 2 an die Versorgungsleitung 4 angelegt. Anschließend werden die Schaltvorrichtungen 6, 7 von einer Steuervorrichtung 30 über Steuerleitungen 31, 32 periodisch mit voreinstellbarer Zeitdauer angesteuert, d.h., daß beide Schaltvorrichtungen 6, 7 von der Steuervorrichtung 30 gleichzeitig angesteuert werden, sodaß diese von ihrem Ruhezustand in einen geschlossenen Zustand über eine voreinstellbare Zeitdauer geschaltet werden. Durch das Schließen der Schaltvorrichtungen 6, 7 wird ein Stromkreis von der Versorgungsleitung 3 zur Versorgungsleitung 4 aufgebaut, d.h. daß von der Versorgungsleitung 3 über die Schaltvorrichtung 6 an die Primärspule 16 und von dieser über die Schaltvorrichtung 7 ein Stromfluß in Richtung zum negativen Potential, also an die Versorgungsleitung 4, aufgebaut wird.

Durch das Durchströmen der Primärspule 16 wird im Transformator 15 die Energie in einem bestimmten Verhältnis von der Primärspule 16 zur Sekundärspule 20 übertragen und versorgt über die Gleichrichterschaltung 21 und die Ausgangsdrossel 28 den Verbraucher 18 und das Werkstück 29 mit Energie, insbesondere mit Strom und Spannung.

Bei dem dargestellten Transformator 15 ist der Wicklungssinn durch zwei Punkte 33, 34 dargestellt, d.h., daß bei gleichem Wicklungssinn der Primärspule 16 und der Sekundärspule 20, wie durch die Punkte 33, 34 dargestellt, auf die Sekundärseite 17 das positive Potential an der Versorgungsleitung 24 und das negative Potential an der Versorgungsleitung 25 anliegt und somit der Schweißbrenner 19 am positiven Potential und das Werkstück 29 am negativen Potential angeschlossen ist.

Um den Stromkreis auf der Sekundärseite 17 des Transformators 15 zu schließen, kann ein Benutzer mit einer in dem Schweißbrenner 19 angeordneten Elektrode 35 einen Lichtbogen 36 zwischen dieser und dem Werkstück 29 aufbauen. Dazu berührt der Benutzer mit der Elektrode 35 das Werkstück 29, sodaß ein Kurzschluß zwischen der Elektrode 35 und dem Werkstück 29 entsteht. Anschließend hebt der Benützer die Elektrode 35 vom Werkstück 29 ab, sodaß zwischen dem Werkstück 29 und der Elektrode 35 des Schweißbrenners 19 der Lichtbogen 36 aufgebaut wird. Durch das Zünden des Lichtbogens 36 wird der Stromkreis auf der Sekundärseite 17 des Transformators 15 geschlossen, sodaß die von der Primärspule 16 auf die Sekundärspule 20 übertragene Energie den Verbraucher 18 zugeführt wird und somit ein Schweißprozeß von einem Benutzer durchgeführt werden kann.

Nach einer voreinstellbaren Zeitdauer deaktiviert die Steuervorrichtung 30 die Schaltvorrichtungen 6, 7, sodaß der Stromkreis über die Primärspule 16 unterbrochen wird. Aufgrund der angeordneten Dioden 8, 9 kann die im Transformator 15 gespeicherte Energie über die Primärspule 16 an die Spannungsquelle 2 zurückgeführt werden. Der Stromfluß wird dabei in entgegengesetzter Richtung des Wickelsinns, also des Punktes 33 der Primärspule 16, aufgebaut, d.h., daß von der Primärspule 16 über die Leitung 14 die Diode 9 an die Spannungsquelle 2 und von der Spannungsquelle 2 über die Diode 8 an die Primärspule 16 ein Stromkreis aufgebaut wird. Durch den Aufbau dieses Stromflusses ist es möglich, daß der Transformator 15 entmagnetisiert wird, sodaß die im Transformator 15 gespeicherte Energie an die Spannungsquelle 2 zurückgespeichert werden kann. Dieser Vorgang ist deshalb notwendig, da aufgrund einer Anordnung einer Halbbrücke 5 der Stromfluß durch die Primärspule 16 nur in eine Richtung erfolgen kann, sodaß bei vollständiger Magnetisierung des Transformators 15 keine Energieübertragung mehr an die Sekundärspule 20 gewährleistet ist, wodurch eine ständige Entmagnetisierung der Primärspule 16 in den Schaltpausen der Schaltvorrichtungen 6, 7 durchgeführt werden muß.

Bei dieser Ausführungsform des Leistungsteils 1 für ein Schweißgerät bzw. für eine Schweißstromquelle ist es erforderlich, daß beim erstmaligen Zünden des Lichtbogens 36 die Elektrode 35 mit dem Werkstück 29 kontaktiert werden muß, um den Lichtbogen 36 beim Entfernen der Elektrode 35 vom Werkstück 29 zu zünden.

Bei Stromumkehrung bzw. in den Schaltpausen der Schaltvorrichtungen 6, 7 bleibt der Lichtbogen 36 zwischen der Elektrode 35 und dem Werkstück 29 aufrecht, da aufgrund der kurzen Umschaltzeit bzw. der kurzen Zeitdauer für die Entmagnetisierung der Primärspule 16 in der Ausgangsdrossel 28 ebenfalls Energie gespeichert wurde, die dem Verbraucher 18, insbesondere dem Lichtbogen 36, in den Schaltpausen zugeführt wird.

Entsteht jedoch zwischen der Elektrode 35 und dem Schweißbad, insbesondere dem Werkstück 29, ein Kurzschluß, so erlischt der Lichtbogen 36. Aufgrund des Kurzschlusses wird von der Spannungsquelle 2 eine Erhöhung des Stromes an der Elektrode 35 auf einen maximalen Ausgangsstrom durchgeführt, sodaß der Tropfen, der den Kurzschluß verursacht hat, abgeschmolzen und ein neuer Lichtbogen 36 aufgebaut werden kann. Es kann jedoch aufgrund der niedrigen Spannung, die durch die Dimensionierung des Transformators 15, z.B. von ca. 40 Volt, festgelegt ist, zu Problemen beim neuerlichen Aufbau des Lichtbogens 36 kommen, da für eine Wiederzündung des Lichtbogens 36 nach dem Auftrennen des Kurzschlusses sich der Widerstand an der Elektrode 35 erhöht, sodaß ein starker Stromabfall am Verbraucher 18 zustande kommt. Dabei ist es möglich, daß die Erhöhung des Widerstandes an der Elektrode 35 so groß ist, daß der Stromfluß unterbrochen wird und somit eine selbständige Zündung des Lichtbogens 36 nicht mehr möglich ist.

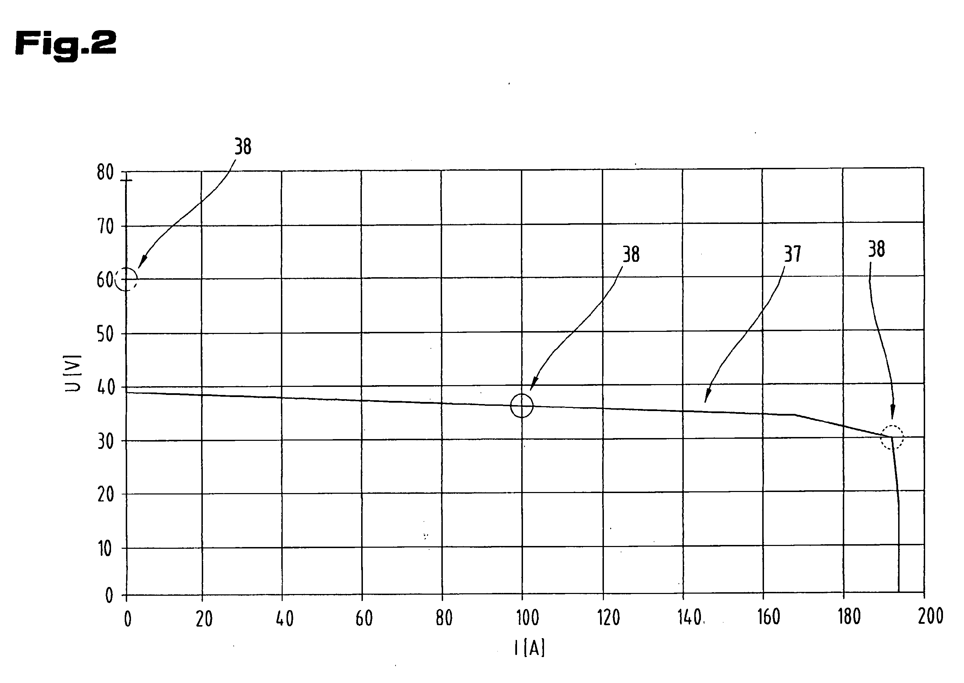

In Fig. 2 ist ein Diagramm für die Ausgangsleistung des Leistungsteils 1, wie es in Fig. 1 beschrieben ist, gezeigt, wobei die Ausgangsleistung zwischen den Ausgängen 26, 27 des Sekundärteils 17 des Transformators 15 gemessen wird.

In dem dargestellten Diagramm ist auf der Ordinate die Spannung U und auf der Abszisse der Strom I dargestellt.

Aus dem Diagramm ist eine Strom/Spannungskennlinie 37 des Energiebedarfs am Verbraucher 18 gezeigt, wobei der Schnittpunkt des Stromwertes mit dem Spannungswert die entsprechende Ausgangsleistung des Leistungsteils 1 definiert. Dabei ist es möglich, daß für einen Schweißprozeß die verschiedenen Parameter, wie z.B. der Schweißstrom, vom Benutzer voreingestellt werden kann.

Der Transformator 15 wird dabei so dimensioniert, daß die maximale Ausgangsspannung also die Schweißspannung von z.B. 40 V und ein maximaler Ausgangsstrom vom z.B. 200 A festgelegt wird. Durch das Festlegen der maximalen Ausgangsspannung und des maximalen Ausgangsstrom ist es möglich, daß bei einem Schweißvorgang der Lichtbogen 36 nach einmaliger Zündung aufrecht erhalten bleibt bzw. nach einem Kurzschluß eine selbständige Zündung möglich ist, d.h., daß aufgrund eines zu großen Tropfens der Elektrode 35 ein Kurzschluß zwischen dem Werkstück 29 und der Elektrode 35 entsteht und somit der Lichtbogen 36 erlischt. Nachdem der Kurzschluß nach Abbrennen des Tropfens beseitigt wurde, erfolgt eine selbständige Zündung des Lichtbogens 36.

Um einen Schweißprozeß durchführen zu können, ist es möglich, daß der Benutzer an der Steuervorrichtung 30 bzw. an der Stromquelle 2 einen Stromwert 38, z.B. von 100 A, einstellt, wodurch der Benutzer einen Schweißprozeß mit 100 A durchführen kann. Nachdem der Benutzer den Lichtbogen 36 gezündet hat, kann eine entsprechende Schweißraupe am Werkstück 29 hergestellt werden. Tritt jedoch zwischen dem Werkstück 29 und der Elektrode 35 ein Kurzschluß auf, so erlischt der Lichtbogen 36. Gleichzeitig wird von der Spannungsquelle 2 ein höherer Stromwert 38 - wie strichliert dargestellt - an die Elektrode 35 angelegt, sodaß der Tropfen bzw. der Kurzschluß zwischen dem Werkstück 29 und der Elektrode 35 aufgetrennt werden kann, d.h., daß die Spannungsquelle 2 den Stromwert 38 von 100 A auf z.B. 190 A - wie strichliert dargestellt - erhöht, sodaß durch Aufschmelzen der Elektrode 35 der Kurzschluß zwischen dem Werkstück 39 und der Elektrode 35 aufgrund des hohen Stromwertes 38 behoben wird. Nachdem der Kurzschluß aufgetrennt wurde, wird der Lichtbogen 36 automatisch gezündet, wobei sich jedoch der Widerstand an der Elektrode 35 wesentlich vergrößert, sodaß ein Stromrückgang am Verbraucher 18 eintritt. Durch die Erhöhung des Widerstandes an der Elektrode 35, sinkt der Stromwert 38 am Verbraucher 18 bis der Stromfluß unterbrochen ist. Durch das Absinken des Stromwertes 38 - wie strichpunktiert dargestellt - auf den Wert 0 bzw. durch das Unterbrechen des Stromflusses erlischt der Lichtbogen 36 abermals. Da nunmehr keine Belastung an den Ausgängen 26, 27 des Leistungsteils 1 vorhanden ist, tritt eine Spannungserhöhung an den Ausgängen 26, 27 ein, wie dies durch den Stromwert 38 mit strichpunktierten Linien dargestellt ist. Durch die Erhöhung der Spannung wird ein leichteres Zünden des Lichtbogens 36 mit einer Zündvorrichtung, beispielsweise einen Hochfrequenzgenerator, erreicht.

Aufgrund des Stromrückganges durch die Erhöhung des Widerstandes an der Elektrode 35 ist es bei dem zum Stand der Technik zählenden Leistungsteil 1 nicht sichergestellt, daß nach Auftrennen eines Kurzschlusses zwischen der Elektrode 35 und dem Werkstück 29 der Lichtbogen 36 aufrecht erhalten bleibt, da der Stromwert 38 von der maximalen Stromleistung auf eine Minimalleistung sinken kann bzw. daß nach sofortiger Zündung des Lichtbogens 36 nach einem Kurzschluß und aufgrund der Erhöhung des Widerstandes an der Elektrode 35 dieser Lichtbogen 36 aufgrund des Unterbrechens des Stromflusses erlischt. Durch das Abreißen des Lichtbogens 36 bzw. durch das Erlöschen des Lichtbogens 36 nach einem Kurzschluß, kann es mit dem zum Stand der Technik zählenden Leistungsteil 1 zu Verlusten der Schweißqualität kommen.

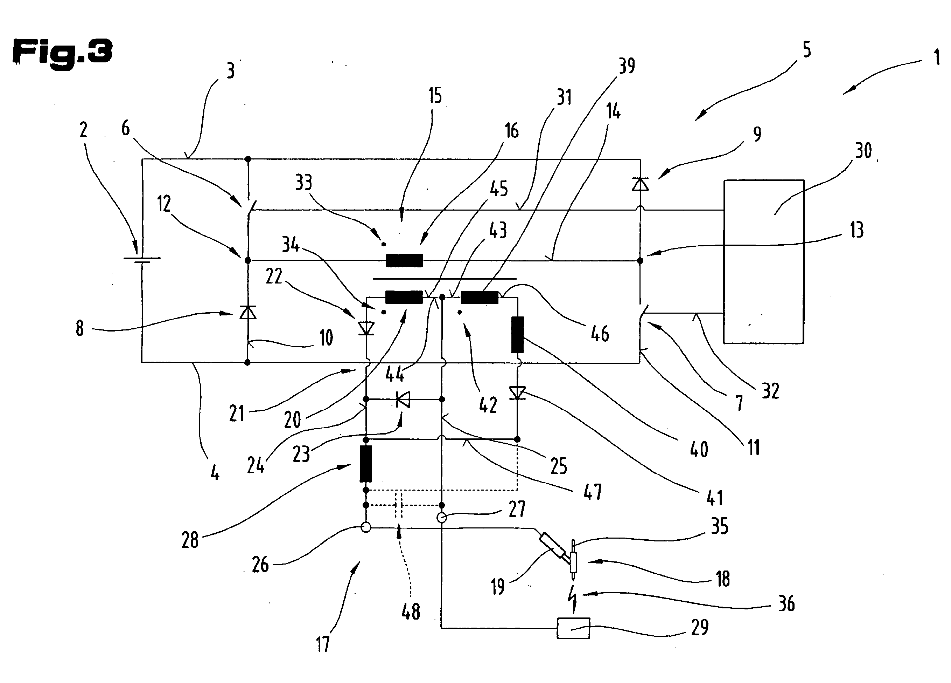

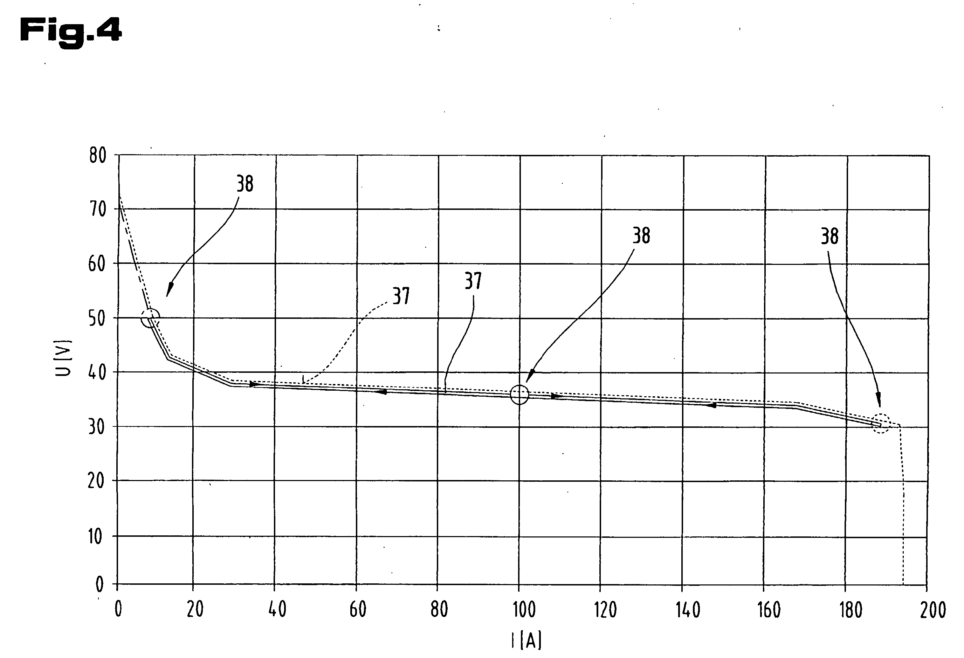

In den Fig. 3 und 4 ist das erfindungsgemäße Leistungsteil 1 sowie ein Diagramm für die Ausgangsleistung des erfindungsgemäßen Leistungsteils 1 gezeigt, wobei für dieselben Teile des zuvor beschriebenen Ausführungsbeispieles dieselben Bezugszeichen verwendet werden.

In dem in Fig. 4 dargestellten Diagramm ist wiederum auf der Ordinate die Spannung U und auf der Abszisse der Strom I dargestellt.

Das erfindungsgemäße Leistungsteil 1 entspricht dabei dem in Fig. 1 gezeigten Ausführungsbeispiel des zum Stand der Technik zählenden Leistungsteils 1. Das erfindungsgemäße Leistungsteil 1 wurde auf der Sekundärseite 17 des Transformators 15 durch eine Zusatzwicklung 39, eine Zusatzdrossel 40 und einer Diode 41 ergänzt. Die Zusatzwicklung 39 ist dabei im Transformator 15 auf der Sekundärseite 17 angeordnet, wobei wiederum der Wicklungssinn durch einen Punkt 42 dargestellt ist. Ein Ausgang 43 der Zusatzwicklung 39, der dem positiven Potential entspricht, also jener Teil, in dem der Punkt 42 angeordnet ist, wird über eine Leitung 44 mit einem Ausgang 45 der Sekundärspule 20 verbunden, d.h., daß das positive Potential der Zusatzwicklung 39 mit dem negativen Potential der Sekundärspule 20 und somit mit der Versorgungsleitung 25 zusammengeschaltet ist.

Ein Ausgang 46 der Zusatzwicklung 39, also das negative Potential der Zusatzwicklung 39, ist über eine Leitung 47 unter Zwischenschaltung der Zusatzdrossel 40 und der Diode 41 mit dem positiven Potential der Sekundärspule 20, also mit der Versorgungsleitung 24, verbunden. Die Diode 41 ist dabei in Durchlaßrichtung zur Versorgungsleitung 24 angeordnet. Das Verbinden der Leitung 47 mit der Versorgungsleitung 24 erfolgt dabei zwischen der Gleichrichterschaltung 21 und der Ausgangsdrossel 28.

Wird nunmehr das erfindungsgemäße Leistungsteil 1 in Betrieb genommen, so werden wiederum von der Steuervorrichtung 30 die Schaltvorrichtungen 6, 7 über eine voreinstellbare Zeitdauer angesteuert. Durch das Ansteuern der Schaltvorrichtungen 6, 7 wird, wie zuvor beschrieben, der Stromkreis durch die Primärspule 16 aufgebaut, sodaß an der Sekundärseite 17 des Transformators 15 der Verbraucher 18 mit Strom und Spannung versorgt werden kann. Der Energiefluß auf der Sekundärseite 17 des Transformators 15 erfolgt dabei wie in Fig. 1 beschrieben. Durch die Anordnung der Zusatzwicklung 39 mit dem positiven Potential zum negativen Potential der Sekundärspule 20 entsteht kein Einfluß auf den zwischen der Sekundärspule 20 und dem Verbraucher 18 aufgebauten Stromkreis.

Öffnet nunmehr die Steuervorrichtung 30 die Schaltvorrichtung 6, 7, so tritt die Entmagnetisierung des Transformators 15 ein, d.h. daß der Transformator 15, wie in Fig. 1 beschrieben, die gespeicherte, magnetische Energie teilweise über die Dioden 8, 9 an die Spannungsquelle 2 und über die Zusatzwicklung 39 an den Verbraucher 18 abgibt. Die im Transformator 15 gespeicherte Energie wird nunmehr über die Zusatzdrossel 40 und über die Diode 41 an den Verbraucher 18 angelegt, d.h., daß ein Stromfluß von der Zusatzwicklung 39 über den Verbraucher 18 und über die Versorgungsleitung 25 entsteht. Vorteilhaft ist dabei, daß durch die primärseitige und durch die sekundärseitige Entmagnetisierung des Transformators 15 ein Teil der gespeicherten Energie dem Verbraucher 18 zur Verfügung gestellt wird. Durch die Abgabe der gespeicherten Energie über die Zusatzwicklung 39 wird nunmehr erreicht, daß die Pulsdauer der Schaltvorrichtungen 6, 7 erweitert wird, d.h., daß trotz Abschaltung der Schaltvorrichtungen 6, 7 noch Energie an den Verbraucher 18 weitergeleitet wird und somit eine simulierte Vergrößerung der Zeitdauer, in der die Schaltvorrichtungen 6, 7 geschlossen sind, erreicht wird. Die Zusatzdrossel 40 hat dabei die Aufgabe, den Stromfluß an den Verbraucher 18 zu regeln, d.h., daß je nach Dimensionierung der Zusatzdrossel 40 erst bei Abfall des Stromwertes 38 auf einen bestimmten Wert zusätzliche Energie an den Verbraucher 18 zugeführt wird.

Der Vorteil der Entmagnetisierung des Transformators 15 über die Sekundärseite 17 liegt darin, daß ein Abreißen des Lichtbogens 36 nach hochohmig werdender Elektrode 35 verhindert wird, da zusätzliche Energie zur Aufrechterhaltung des Lichtbogens 36 zur Verfügung gestellt wird und somit der Stromfluß nach dem Auftrennen des Kurzschlusses nicht unterbrochen wird.

Aus Fig. 4 ist ein Diagramm für die Ausgangsleistung des Leistungsteils 1, wie es in Fig. 3 beschrieben ist, gezeigt, wobei die Ausgangsleistung zwischen den Ausgängen 26, 27 des Sekundärteils 17 des Transformators 15 gemessen wird. In dem Diagramm ist wieder die Strom/Spannungskennlinie 37 für den Verbraucher 18 dargestellt, wobei der Schnittpunkt des Stromwertes und dem Spannungswert die entsprechende Ausgangsleistung des erfindungsgemäßen Leistungsteils 1 definiert. Die mit strichlierten Linien dargestellte Strom/Spannungskennlinie 37 zeigt dabei die gesamte Leistungskurve des Leistungsteils 1, wogegen die in vollen Linien dargestellte Strom/Spannungskennlinie 37 das Regelverhalten des erfindungsgemäßen Leistungsteils 1 zeigt.

Um einen Schweißprozeß mit dem erfindungsgemäßen Leistungsteil 1 durchführen zu können, wird wiederum vom Benutzer ein entsprechender Stromwert 38 an der Schweißstromquelle eingestellt, wobei z.B. der Benutzer einen Stromwert 38 von 100 A einstellt. Nach dem Zünden des Lichtbogens 36 kann der Benutzer einen entsprechenden Schweißprozeß durchführen.

Tritt jedoch ein Kurzschluß zwischen dem Werkstück 29 und der Elektrode 35 auf, so wird wiederum von der Spannungsquelle 2 mehr Energie an den Verbraucher 18 geliefert, d.h., daß der Stromwert 38 von 100 A auf z.B. 190 A hinaufgesetzt wird, wie dies mit dem strichliert dargestellten Stromwert 38 gezeigt ist. Dadurch wird erreicht, daß der Kurzschluß zwischen der Elektrode 35 und dem Werkstück 29 durch Aufschmelzen der Elektrode 35 unterbrochen wird.

Anschließend erfolgt eine automatische Zündung des Lichtbogens 36, wobei sich jedoch der Widerstand der Elektrode 35 erhöht, sodaß dies einen Stromrückgang am Verbraucher 18 bewirkt. Um den Lichtbogen 36 leichter aufrecht erhalten zu können, müßte eine höhere Spannung an die Elektrode 35 angelegt werden. Da jedoch das Leistungsteil 1 beim Schweißprozeß so ausgelegt ist, daß eine konstante Schweißspannung von z.B. 40 V an die Elektrode 35 angelegt wird, ist es bei einem zum Stand der Technik zählenden Leistungsteil 1 nicht möglich, daß eine Spannungserhöhung durchgeführt werden kann, wodurch der Stromwert 38 soweit sinken kann, daß eine Stromflußunterbrechung eintreten kann. Durch die Anordnung der Zusatzwicklung 39 wird jedoch Energie in den Schaltpausen, in denen die Schaltvorrichtungen 6, 7 geöffnet sind, an den Verbraucher 18, also an die Elektrode 35, zugeführt, sodaß beim Absinken des Stromwertes 38, z.B. auf 8 A, durch die zusätzliche Energie eine Spannungserhöhung beispielsweise von 40 V auf 50 V erfolgt. Durch diese Spannungserhöhung und gleichzeitige Lieferung von Strom an die Elektrode 35 wird der Lichtbogen 36 stabilisiert. Gleichzeitig bleibt jedoch der Lichtbogen 36 zwischen der Elektrode 35 und dem Werkstück 29 aufrecht, da nunmehr ein Stromfluß von z.B. 8 A mit einer Spannungshöhe von beispielsweise 50 V an die Elektrode 35 erfolgt, sodaß ein Erlöschen des Lichtbogens 36 verhindert werden kann. Würde der Widerstand an der Elektrode 35 weiter steigen, so würde der Stromwert 38 entsprechend der strichpunktierten Linien sich variieren, wodurch eine weitere Spannungserhöhung mit einem gleichzeitigen Stromfluß an den Verbraucher 18 erfolgt. Durch das Variieren des Stromwertes 38 entsprechend der strichpunktierten Linie wird ein Erlöschen des Lichtbogens 36 verhindert.

Nachdem der Lichtbogen 36 stabilisiert wurde, fällt der Widerstand an der Elektrode 35, sodaß eine Stromerhöhung auf den eingestellten Stromwert 38 durchgeführt wird und somit ein einwandfreier Schweißprozeß vom Benutzer durchgeführt werden kann.

Aufgrund der Erhöhung der Spannung und des Stromes durch die Zusatzwicklung 39 kann nunmehr gesagt werden, daß ein Erlöschen des Lichtbogens 36 nach einem Kurzschluß verhindert wird. Das Eintreten der Spannungserhöhung mit gleichzeitiger Stromlieferung an den Verbraucher 18 kann durch die Zusatzdrossel 40 eingestellt werden, d.h., daß je nach Auslegung der Zusatzdrossel 40 ab einem bestimmten Stromwert 38, beispielsweise von ca. 22 A, ein Energiefluß von der Zusatzwicklung 39 eintritt. Gleichzeitig kann gesagt werden, daß durch die Lieferung der im Transformator 15 gespeicherten Energie an den Verbraucher 18 eine effektive Erhöhung der Pulsweite, also der Zeitdauer, in der die Schaltvorrichtungen 6, 7 geschlossen sind, erreicht wird.

Weiters ist aus Fig. 3 eine weitere Ausführungsform der Beschaltung der Sekundärseite 17 des Transformators 15 mit strichlierten Linien gezeigt. Bei diesem Ausführungsbeispiel wird die Leitung 47 für die Zusatzwicklung 39 nicht - wie mit vollen Linien gezeigt - zwischen der Ausgangsdrossel 28 und der Gleichrichterdiode 22 mit der Versorgungsleitung 24 verbunden, sondern wird zwischen der Ausgangsdrossel 28 und dem Ausgang 26 mit der Versorgungsleitung 24 verbunden. Dazu ist es möglich, daß zwischen dem Verbinden der Leitung 47 und dem Ausgang 26 ein Kondensator 48 parallel zu den Ausgängen 26 und 27 angeordnet wird.

Vorteilhaft ist bei dieser Ausführungsvariante, daß bei Nichtbenötigung der gesamten Energie, die den Verbraucher 18 bei der Entmagnetisierung des Transformators 15 zur Verfügung gestellt wird, diese in den Kondensator 48 zwischengespeichert werden kann. Diese Ausführungsvariante wird hauptsächlich für reine Spannungsquellen - beispielsweise für Batterieladegeräte - eingesetzt.

Durch die Anordnung des Kondensators 48 ist es auch möglich, daß eine vollständige Entmagnetisierung des Transformators 15 nur auf die Sekundärseite 17 erfolgen kann, wobei die überschüssige Energie im Kondensator 48 gespeichert wird. Bei einer vollständigen Entmagnetisierung des Transformators 15 auf die Sekundärseite 17 können auf der Primärseite des Transformators 15 die Dioden 8, 9 sowie auf der Sekundärseite 17 die Zusatzdrossel 40 entfallen, wobei trotzdem die Funktion des zuvor beschriebenen Ausführungsbeispieles beibehalten wird.

Selbstverständlich ist es möglich, daß die Zusatzdrossel 40 und die Diode 41 in der Versorgungsleitung 25 angeordnet sein können und somit in der Leitung 47 entfallen können. Es ist auch möglich, daß sowohl in der Versorgungsleitung 25 und in der Leitung 47 jeweils eine Zusatzdrossel 40 und eine Diode 41 angeordnet sein können.

Weiters ist es auch möglich, daß anstelle einer Halbbrücke 5 des Leistungsteils 1 jedes andere Leistungsteil 1, insbesondere bei dem eine Entmagnetisierung des Transformators 15 auf die Primärseite und auf die Sekundärseite 17 möglich ist, eingesetzt werden kann.

Es sei der Ordnung halber darauf hingewiesen, daß in den Zeichnungen einzelne Bauteile und Baugruppen zum besseren Verständnis der Erfindung unproportional und maßstäblich verzerrt dargestellt sind.

Desweiteren wird darauf hingewiesen, daß es sich bei dem dargestellten Schaltbild um ein schematisch vereinfachtes Schaltbild handelt, in welchem einzelne Schaltdetails, wie z.B. zur Stabilisierung der Spannung bzw. zur Vermeidung von Kurzschlüssen, nicht dargestellt sind.

### Bezugszeichenaufstellung

- 1: Leistungsteil
- 2: Spannungsquelle
- 3: Versorgungsleitung
- 4: Versorgungsleitung
- 5: Halbbrücke

- 6: Schaltvorrichtung
- 7: Schaltvorrichtung
- 8: Diode
- 9: Diode
- 10: Verbindungsleitung

- 11: Verbindungsleitung
- 12: Mittelpunkt
- 13: Mittelpunkt
- 14: Leitung
- 15: Trafo

- 16: Primärspule
- 17: Sekundärseite
- 18: Verbraucher
- 19: Schweißbrenner
- 20: Sekundärspule

- 21: Gleichrichterschaltung
- 22: Gleichrichterdiode
- 23: Freilaufdiode
- 24: Versorgungsleitung
- 25: Versorgungsleitung

- 26: Ausgang
- 27: Ausgang
- 28: Ausgangsdrossel
- 29: Werkstück
- 30: Steuervorrichtung

- 31: Steuerleitung
- 32: Steuerleitung
- 33: Punkt
- 34: Punkt
- 35: Elektrode

- 36: Lichtbogen
- 37: Strom/Spannungskennlinie
- 38: Stromwert
- 39: Zusatzwicklung
- 40: Zusatzdrossel

- 41: Diode
- 42: Punkt
- 43: Ausgang
- 44: Leitung
- 45: Ausgang

- 46: Ausgang
- 47: Leitung
- 48: Kondensator

## Patentansprüche

1. Leistungsteil einer Schweißstromquelle für ein Lichtbogenschweißgerät, bestehend aus einer Halbbrücke, die durch zwei gegenüberliegende Schaltvorrichtungen und jeweils eine Diode gebildet ist, und einer im Mittelpunkt zwischen jeweils einer Schaltvorrichtung und einer Diode angeschlossenen Primärspule eines Transformators, wobei eine Sekundärspule des Transformators unter Zwischenschaltung einer Gleichrichterschaltung und einer Ausgangsdrossel über Ausgänge mit einem Schweißbrenner und einem Werkstück verbunden ist, **dadurch gekennzeichnet, daß** an dem Sekundärteil (17) des Transformators (15) eine Zusatzwicklung (39) angeordnet ist, wobei ein Ausgang (43) mit dem positiven Potential der Zusatzwicklung (39) mit einem Ausgang (45) mit dem negativen Potential der Sekundärspule (20) verbunden ist und daß ein weiterer Ausgang (46) mit dem negativen Potential der Zusatzwicklung (39) über eine Zusatzdrossel (40) und eine in Durchlaßrichtung angeordnete Diode (41) zwischen der Gleichrichterschaltung (21) und der Ausgangsdrossel (28) mit dem positiven Potential der Sekundärspule (20) verbunden ist und durch die Dimensionierung der Zusatzdrossel (40) der Energiefluß vom Transformator (15) während der Schaltpausen der Schaltvorrichtungen (6, 7) auf die Sekundärseite (17) festgelegt ist.

2. Leistungsteil nach Anspruch 1, **dadurch gekennzeichnet, daß** der Ausgang (46) mit dem negativen Potential unter Zwischenschaltung der Zusatzdrossel (40) und der Diode (41) über eine Leitung (47) zwischen dem Ausgang (26) und der Ausgangsdrossel (28) mit einer Versorgungsleitung (24) verbunden ist und daß zwischen dem Verbindungspunkt der Leitung (47) mit der Versorgungsleitung (24) und dem Ausgang (26) ein Kondensator (48) parallel zu den Ausgängen (26, 27) angeordnet ist.

3. Leistungsteil nach Anspruch 1 oder 2, **dadurch gekennzeichnet, daß** die Zusatzdrossel (40) und die Diode (41) in einer weiteren Versorgungsleitung (25) angeordnet sind.

4. Leistungsteil nach Anspruch 1, **dadurch gekennzeichnet, daß** sowohl in einer Versorgungsleitung (25) und in einer Leitung (47) jeweils eine Zusatzdrossel (40) und eine Diode (41) angeordnet ist.

5. Verfahren zur Erweiterung der Ausgangsspannung bzw. des Ausgangsstroms eines Leistungsteils einer Schweißstromquelle für ein Lichtbogenschweißgerät, bei dem durch taktweises Ansteuern von zwei Schaltvorrichtungen eine Primärspule mit von einer Stromquelle gelieferter Energie versorgt wird, die anschließend an die Sekundärspule übertragen wird, worauf diese gleichgerichtet und über eine Ausgangsdrossel an einen Schweißbrenner und ein Werkstück weitergeleitet wird, **dadurch gekennzeichnet, daß** in den Pausen, in denen die Schaltvorrichtungen nicht geschlossen sind, die Energie, die in der Primärspule gespeichert ist, über zu den Schaltvorrichtungen in Serie geschaltete Dioden zur Spannungsquelle zurückgeliefert wird und daß die in der Sekundärspule und in einer Zusatzwicklung gespeicherte Energie über eine Zusatzdrossel und die Ausgangsdrossel dem Schweißbrenner und dem Werkstückzugeführt wird.

## Claims

1. Power stage of a welding current source for an arc welding apparatus, comprising a half bridge formed by two oppositely lying switching devices and a respective diode, and a primary coil of a transformer connected at the centre point between a switching device and a diode respectively, and a secondary coil of the transformer is connected via outputs to a welding torch and a workpiece with a rectifier circuit and an output choke connected in between, **characterised in that** an auxiliary winding (39) is provided at the secondary stage (17) of the transformer (15), and one output (43) having the positive potential of the auxiliary winding (39) is connected to an output (45) having the negative potential of the secondary coil (20), and another output (46) having the negative potential of the auxiliary winding (39) is connected to the positive potential of the secondary coil (20) via an auxiliary choke (40) and a diode (41) disposed between the rectifier circuit (21) and output choke (28) in the conducting direction, and the energy flow of the transformer (15) is set by the dimensioning of the auxiliary choke (40) during pauses in the switching of the switching devices (6, 7) to the secondary stage (17).

2. Power stage as claimed in claim 1, **characterised in that** the output (46) having the negative potential with the interconnected auxiliary choke (40) and diode (41) is connected to a supply line (24) via a line (47) between the output (26) and the output choke (28), and a capacitor (48) is connected in parallel with the outputs (26, 27) between the connecting point of the line (47) to the supply line (24) and the output (26).

3. Power stage as claimed in claim 1 or 2, **characterised in that** the auxiliary choke (40) and the diode (41) are disposed in another supply line (25).

4. Power stage as claimed in claim 1, **characterised in that** an auxiliary choke (40) and a diode (41) are each provided in both a supply line (25) and a line (47).

5. Method of extending the output voltage and the output current of a power stage of a welding current source for an arc welding apparatus, whereby two switching devices are activated in timed cycles to supply a primary coil with energy delivered from a current source, which is then transferred to the secondary coil, after which it is rectified and forwarded via an output choke to a welding torch and a workpiece, **characterised in that** during pauses in which the switching devices are not closed, the energy stored in the primary coil is returned to the voltage source via diodes connected in series with the switching devices, and the energy stored in the secondary coil and in an auxiliary winding is returned to the welding torch and workpiece via an auxiliary choke and the output choke.

## Revendications

1. Élément de puissance d'une source de courant de soudage pour un appareil de soudage à arc électrique, comportant un demi-pont, qui est formé par deux dispositifs de commutation opposés et respectivement une diode, et une bobine primaire d'un transformateur, raccordée au centre entre respectivement un dispositif de commutation et une diode, une bobine secondaire du transformateur étant reliée via des sorties à un chalumeau et une pièce à souder moyennant la pose intercalée d'un circuit en redresseur et d'une bobine de sortie, **caractérisé en ce qu'**un enroulement supplémentaire (39) est disposé sur l'élément secondaire (17) du transformateur (15), une sortie (43) avec le potentiel positif de l'enroulement supplémentaire (39) étant reliée à une sortie (45) avec le potentiel négatif de la bobine secondaire (20), et **en ce qu'**une autre sortie (46) avec le potentiel négatif de l'enroulement supplémentaire (39) est reliée au potentiel positif de la bobine secondaire (20) par l'intermédiaire d'une bobine supplémentaire (40) et d'une diode (41) disposée dans le sens de passage entre le circuit en redresseur (21) et la bobine de sortie (28), et par le dimensionnement de la bobine supplémentaire (40) est défini le flux d'énergie du transformateur (15), pendant les pauses de commutation des dispositifs de commutation (6, 7), vers le côté secondaire (17).

2. Élément de puissance selon la revendication 1, **caractérisé en ce que** la sortie (46) avec le potentiel négatif est reliée à une ligne d'alimentation (24) via une ligne (47) entre la sortie (26) et la bobine de sortie (28) moyennant la pose intercalée de la bobine supplémentaire (40) et de la diode (41), et **en ce qu'**entre le point de liaison de la ligne (47) avec la ligne d'alimentation (24) et la sortie (26) est monté un condensateur (48) parallèlement aux sorties (26, 27).

3. Élément de puissance selon la revendication 1 ou 2, **caractérisé en ce que** la bobine supplémentaire (40) et la diode (41) sont montées dans une ligne d'alimentation (25) supplémentaire.

4. Élément de puissance selon la revendication 1, **caractérisé en ce que** tant dans une ligne d'alimentation (25) que dans une ligne (47) sont montées respectivement une bobine supplémentaire (40) et une diode (41).

5. Procédé pour accroître la tension de sortie ou le courant de sortie d'un élément de puissance d'une source de courant de soudage pour un appareil de soudage à arc électrique, dans lequel par une activation synchronisée de deux dispositifs de commutation, une bobine primaire est alimentée avec l'énergie, qui est fournie par une source de courant et qui est transmise ensuite à la bobine secondaire, à la suite de quoi elle est redressée et est transmise par l'intermédiaire d'une bobine de sortie vers un chalumeau et une pièce à souder, **caractérisé en ce que** pendant les pauses au cours desquelles les dispositifs de commutation ne sont pas fermés, l'énergie, qui est stockée dans la bobine primaire, est renvoyée vers la source de courant par l'intermédiaire des diodes montées en série par rapport aux dispositifs de commutation, et **en ce que** l'énergie stockée dans la bobine secondaire et dans un enroulement supplémentaire est acheminée via une bobine supplémentaire et la bobine de sortie vers le chalumeau et la pièce à souder.
